(19) **Europäisches Patentamt / European Patent Office / Office européen des brevets**

(11) **EP 3 357 346 A1**

(12) **EUROPEAN PATENT APPLICATION**
published in accordance with Art. 153(4) EPC

(43) Date of publication:
**08.08.2018 Bulletin 2018/32**

(21) Application number: **15905429.5**

(22) Date of filing: **30.09.2015**

(51) Int Cl.:
***A23K 50/00*** (2016.01)    ***A23K 10/00*** (2016.01)

(86) International application number:
**PCT/JP2015/077854**

(87) International publication number:
**WO 2017/056275 (06.04.2017 Gazette 2017/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Unicharm Corporation Ehime 799-0111 (JP)**

(72) Inventors:
• **SAKODA Junya**
Itami-shi
Hyogo 664-0831 (JP)
• **TAGAMI Ayumu**
Tokyo 114-0002 (JP)
• **KOYAMA Kinichiro**
Tokyo 114-0002 (JP)

(74) Representative: **Staeger & Sperling Partnerschaftsgesellschaft mbB Sonnenstraße 19 80331 München (DE)**

(54) **PET FOOD**

(57) Provided is pet food which contains refined cellulose and has a moisture content of 6% to 15% by mass, in which an average grain size of the refined cellulose is 50 μm or greater, and 60% or more of food granules in the entire food granules constituting the pet food have a hardness of 2.5 kgw or less immediately after being immersed in dilute hydrochloric acid (pH of 2.5) at 25°C for 10 minutes.

FIG. 1

EP 3 357 346 A1

## Description

Technical Field

The present invention relates to pet food. More specifically, the present invention relates to pet food that reduces vomiting of a pet after intake.

Background Art

Animals with a habit of doing grooming daily swallow their own body hair during the grooming. Accordingly, a phenomenon in which the body hair is accumulated in the digestive tract to form a hairball may occur. For this reason, a technique of adjusting excretion of cat's body hair by adding a fiber source such as cellulose to pet food for the purpose of promoting excretion of body hair to prevent formation of a hair ball has been known (for example, see PTL 1).

Meanwhile, it is common to see a cat swallowing the body hair during grooming and vomiting the hairball accumulated in the body. However, apart from vomiting the hairball, a cat vomits pet food within approximately one hour after eating the pet food in some cases. Even in a case of a healthy cat that does not have a kidney disease, a rate of occurrence of such vomiting increases with age. For example, in cats aged 7 to 9 and over, one cat out of two cats vomits daily (vomiting rate of 50%).

As the result of research performed by the present inventors on vomiting of a cat after eating, since the vomiting occurs within approximately one hour after eating and the vomit is transparent or light yellow, it is considered that the eaten pet food is thrown up in a state in which the bile has not been sufficiently mixed with the eaten pet food, that is, at a stage where the food has advanced up to the upper part of the stomach to the duodenum. Although it is usually said that the digestibility of a cat is high, such vomiting is considered to be caused because the pet food staying in the upper part of the stomach to the duodenum in a solid state stimulates the stomach wall or the intestinal wall.

Further, pet food that can reduce vomiting after eating by containing lignocellulose has been invented and the patent application has been filed (PTL 2).

Citation List

Patent Literature

[PTL 1] Published Japanese Translation No. 2003-519639
[PTL 2] Japanese Unexamined Patent Application, First Publication No. 2014-079238

Summary of Invention

Technical Problem

Lignocellulose is a wood fiber containing lignin, such as wood powder. As a fiber source to be added to food, cellulose which has been subjected to a lignin removal treatment is more popular than lignocellulose and is preferable from the viewpoint of a high degree of recognition.

However, as described in PTL 2, it has been considered that the effect of suppressing vomiting cannot be obtained in a case where cellulose is used in place of lignocellulose.

The present invention has been made in consideration of the above-described circumstances, and an object thereof is to provide pet food which is capable of reducing vomiting of a pet after eating using cellulose.

Solution to Problem

As a result of examination performed by the present inventors, surprisingly, it was found that an excellent effect of suppressing vomiting can be obtained by using refined cellulose having a specific grain size, thereby completing the present invention.

The present invention has the following aspects.

(1) Pet food which contains refined cellulose and has a moisture content of 6% to 15% by mass, in which an average grain size of the refined cellulose is 50 μm or greater, and 60% or more of food granules in the entire food granules constituting the pet food have a hardness of 2.5 kgw or less immediately after being immersed in dilute hydrochloric acid (pH of 2.5) at 25°C for 10 minutes.

(2) The pet food according to (1), in which, in the refined cellulose, the percentage of refined cellulose having a grain size of 100 $\mu$m or greater is 20% or greater, the percentage of refined cellulose having a grain size of 200 $\mu$m or greater is 5% or greater, and the percentage of refined cellulose having a grain size of 300 $\mu$m or greater is 2% or greater.

(3) The pet food according to (1) or (2), in which 45% or more of food granules in the entire food granules constituting the pet food have a hardness of 1.3 kgw or less immediately after being immersed in dilute hydrochloric acid (pH of 2.5) at 25°C for 10 minutes.

(4) The pet food according to any one of (1) to (3), in which the refined cellulose is derived from a coniferous tree.

(5) The pet food according to any one of (1) to (4), in which the food granule has a modified cross section.

(6) The pet food according to any one of (1) to (5), in which the food granule has a long diameter of 5 to 15 mm, a short diameter of 5 to 15 mm, and a thickness of 2 to 5 mm.

(7) The pet food according to any one of (1) to (6), in which the food granule is coated with fats and oils.

(8) The pet food according to any one of (1) to (7) which is feed for a cat.

Advantageous Effects of Invention

The pet food of the present invention is capable of reducing vomiting of a pet after eating.

Brief Description of Drawings

FIG. 1 shows an example of a chewing waveform obtained by measuring pet food using a physical property measuring device.
FIG. 2 is a photomicrograph of fibers used in Example 1.
FIG. 3 is a photomicrograph of fibers used in Comparative Example 2.
FIG. 4 is a photomicrograph of fibers used in Reference Example 1.

Description of Embodiments

In the present specification, the term "pets" indicates animals that have been bred by people. In a narrower sense, pets are animals being cared for by their owners. Further, the term "pet food" indicates feed for pets. The pet food of the present invention can be sold as "animal feed" or "animal food".

In the present specification, the expression "coated with" fats and oils means that fats and oils are applied onto the surface of a food granule and allowed to adhere to the food granule and includes a case where some or the entirety of the applied fats and oils infiltrate into the food granule (the food granule is impregnated with fats and oils).

The moisture content of the pet food according to the present invention is in a range of 6% to 15% by mass, preferably in a range of 8% to 15% by mass, and more preferably in a range of 8% to 12% by mass. In a case where the moisture content thereof is greater than or equal to the above-described lower limit, the gaps between surfaces of food granules are not filled and water absorbing properties are sufficiently obtained. Further, in a case where the moisture content thereof is less than or equal to the above-described upper limit, sufficient palatability and the effect of suppressing vomiting are obtained.

[Method of measuring moisture content]

In the present specification, the moisture content is a value acquired by a normal pressure heating and drying method.

Specifically, an object to be measured is pulverized using a pulverizer so as to pass through a sieve having an opening diameter of 1 mm and then used as a sample. The mass (W1 gram) of an aluminum weighing can is measured in advance as a constant weight value. The sample is put into the aluminum weighing can and the mass (W2 gram) is weighed. Next, the sample is dried under conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following equation.

$$\text{Moisture content (unit: \% by mass)} = (W2 - W3) \div (W2 - W1) \times 100$$

The "moisture content of pet food" which is a mixture of granules and small pieces is a value obtained by measuring the mixture as an object to be measured. The "moisture content of granules (or small pieces)" is a value obtained by measuring only one kind of granules (or small pieces) as an object to be measured.

Both moisture contents are set to values measured immediately after pet food (hereinafter, also referred to as a pet food product) produced by accommodating granules and small pieces constituting the pet food in a packaging container and sealing the packaging container is opened within 30 days from the date of manufacture or set to values measured under conditions similar to the conditions described above.

[Method of measuring hardness]

In the present specification, the hardness (breaking hardness) of the food granule is a value obtained by the following measuring method.

The breaking stress at the time when small pieces of dried meat are compressed at a constant compression rate is measured under the following conditions using a compression tester (TEXTUROMETER, model No.: GTX-2, manufactured by ZENKEN CORPORATION).

Plunger: cylindrical plunger having diameter of 3 mm
Platform: flat dish
Compression rate: LOW
Output: 1 V
Lowest point of plunger: 2 mm (gap between flat dish and plunger)
Measurement temperature: 25°C

Specifically, one small piece of dried meat to be measured is placed on the flat dish and the stress is measured while a plunger is vertically pressed from the top of the small piece at a constant rate. The peak value (maximum value) of the stress is read as the value of the breaking stress. The measurement is repeated with respect to ten small pieces and the average value of the obtained values is acquired.

The numerical value unit of the breaking hardness is converted into newton (N) by multiplying the numerical value of the breaking stress (unit: kgw) measured using the above-described compression tester by 9.8.

Further, the hardness of the small piece of dried meat is set to a value measured immediately after the pet food product is opened within 30 days from the date of manufacture or a value measured under conditions similar to the conditions described above.

<Refined cellulose>

The pet food of the present invention contains refined cellulose. In the present specification, the refined cellulose indicates cellulose having a lignin content of less than 1%. In the pet food of the present invention, the lignin content in the refined cellulose is preferably 0.8% or less, more preferably 0.5% or less, and still more preferably 0.3% or less.

In the pet food of the present invention, the average grain size of the refined cellulose is 50 $\mu$m or greater, preferably 55 $\mu$m or greater, and more preferably 60 $\mu$m or greater. In a case where the pet food contains refined cellulose having an average grain size of 50$\mu$m or greater, water absorbing properties of food granules of dried food are improved. As the result, the fibers in the food granules absorb the gastric juice so that the food granules soften after a cat has eaten the food granules, and thus stimulation to the stomach can be suppressed.

In the refined cellulose in the pet food of the present invention, it is preferable that the percentage of refined cellulose having a grain size of 100 $\mu$m or greater is 20% or greater, the percentage of refined cellulose having a grain size of 200 $\mu$m or greater is 5% or greater, and the percentage of refined cellulose having a grain size of 300 $\mu$m or greater is 2% or greater. It is more preferable that the percentage of refined cellulose having a grain size of 100 $\mu$m or greater is 25% or greater, the percentage of refined cellulose having a grain size of 200 $\mu$m or greater is 8% or greater, and the percentage of refined cellulose having a grain size of 300 $\mu$m or greater is 3% or greater. It is still more preferable that the percentage of refined cellulose having a grain size of 100 $\mu$m or greater is 30% or greater, the percentage of refined cellulose having a grain size of 200 $\mu$m or greater is 10% or greater, and the percentage of refined cellulose having a grain size of 300 $\mu$m or greater is 5% or greater. In a case where the refined cellulose contains an appropriate amount of fibers with a large grain size, the effect of water absorption is improved.

[Method of measuring average grain size of refined cellulose and percentage of fibers]

In the present specification, the average grain size of refined cellulose is a value obtained according to the following measuring method.

0.5 g of refined cellulose used for measurement is collected in a 100 ml beaker, 60 ml of 0.5% hexametaphosphoric acid solution is added to the beaker, and the solution is treated under conditions of an output of 100% for 2 hours using an ultrasonic treatment device (manufactured by Hielscher Ultrasonic GmbH), thereby obtaining a measurement sample.

The obtained sample is analyzed by a laser diffraction type grain size distribution measuring device (product name: MASTERSIZER 2000, manufactured by Spectris Co., Ltd.), the grain size distribution is expressed as accumulation distribution, and the value at which the accumulation distribution becomes 50% is set as the average grain size. Further, the percentage of refined cellulose (fibers) having a grain size of 100 μm or greater, the percentage of refined cellulose (fibers) having a grain size of 200 μm or greater, and the percentage of refined cellulose (fibers) having a grain size of 300 μm or greater are respectively calculated based on the total accumulation distribution.

[Method of producing refined cellulose]

The refined cellulose can be produced by performing an ingredient pulp slurry preparing step, an acid hydrolysis reaction step, a neutralizing, washing, and dehydrating step, a drying step, a pulverizing step, and a classifying step described below.

[Ingredient pulp slurry preparing step]

Pulp used as an ingredient of refined cellulose is not particularly limited, and both of pulp derived from a broad-leaved tree and pulp derived from a coniferous tree can be used.

Examples of the broad-leaved tree include acer, birch, fagus crenata, acacia, and eucalyptus. Among these, fagus crenata, acacia, or eucalyptus is preferable.

Examples of the coniferous tree include cryptomeriajaponica, piceajezoensis, larix kaempferi, pinus thumbergii, abies sachalinensis, pinus parviflora, texus cuspidata, thuja standishii, picea torano, picea alcokiana, podocarpus macrophyllus, abies firma, scomberomorus niphonius, pseudotsuga japonica, thujopsis dolabrata, thujopsis, tsuga sieboldii, tsuga diversifolia, chamaecyparis obtusa, taxus cuspidata, cephalotaxus harringtonia, picea, chamaecryparis lawsonia, pseudotsuga menziesii, picea sitchensis, pinus radiata, Eastern red spruce, pinus strobus, and tree species related to these. Among these, cryptomeria japonica, picea jezoensis, larix kaempferi, pinus thumbergii, abies sachalinensis, chamaecyparis obtusa, pinus densiflora, pseudotsuga menziesii, or pinus radiata is preferable, and piceajezoensis, larix kaempferi, pinus densiflora, or pseudotsuga menziesii is more preferable.

The pulp may be used alone or in combination of optional two or more kinds thereof.

In the present invention, it is preferable that the refined cellulose is derived from a coniferous tree. By using pulp derived from a coniferous tree as an ingredient of the refined cellulose, refined cellulose having an average grain size of 50 μm or greater is easily obtained.

A pulping method (digestion method) for an ingredient is not particularly limited, and examples thereof include a sulfite digestion method, a kraft digestion method, a soda and quinone digestion method, and an organosolve digestion method.

The pulp ingredient which can be used may be in a flow state or in a sheet shape. In a case where flowing pulp from a pulp bleaching step is used as an ingredient, the concentration thereof needs to be increased before the ingredient is put into a hydrolysis reaction tank, the ingredient is concentrated using a dehydrator such as a screw press or a belt filter, and a predetermined amount of ingredient is put into the reaction tank. In a case where a dry sheet of pulp is used as an ingredient, pulp is ground using a crusher such as a roll crusher, and the ground pulp is put into the reaction tank.

[Acid hydrolysis reaction step]

Next, the acid concentration is adjusted to be in a range of 0.1 to 2.0 N and preferably in a range of 0.1 N to 1.5 N, and a dispersion liquid having a pulp concentration of 3% to 10% by weight (in terms of solid content) is treated under a temperature condition of 80°C to 100°C for 30 minutes to 3 hours. After the hydrolysis treatment performed on the pulp, the resultant is solid-liquid separated into waste acid and pulp which is hydrolyzed during a dehydrating step.

[Neutralizing, washing, and dehydrating step]

The hydrolyzed pulp is neutralized by adding an alkali agent, washed and dehydrated.

The alkali agent is not particularly limited, and a known one can be used as the alkali agent.

The washing and dehydrating step can be performed according to a known method in the field of pulp of the related art.

[Drying step, pulverizing step, and classifying step]

Thereafter, food granules are dried using a dryer and mechanically pulverized and classified such that the food granules have a prescribed size using a pulverizer.

Examples of the pulverizer used in the present invention include cutting type mills such as a mesh mill (manufactured by HORAI CO., LTD.), ATOMS (manufactured by Yamamoto Hyakuma Seisakusho K.K.), a knife mill (manufactured by PALLMANN), a cutter mill (manufactured by TOKYO ATOMIZER M.F.G. CO., LTD.), a CS cutter (manufactured by Mitsui Mining Co., Ltd.), a rotary cutter mill (manufactured by NARA MACHINERY Co., Ltd.), a turbo cutter (manufactured by Freund Corp.), a pulp primary crusher (manufactured by ZUIKO CORPORATION), and a shredder (manufactured by Shinko Pantec Co., Ltd.); hammer type mills such as a jaw crusher (manufactured by Makino) and a hammer crusher (manufactured by MAKONO MFG. CO., LTD.); impact type mills such as a pulverizer (manufactured by Hosokawa Micron Corporation), a fine impact mill (manufactured by Hosokawa Micron Corporation), a super micron mill (manufactured by Hosokawa Micron Corporation), INNOMIZER (manufactured by Hosokawa Micron Corporation), a fine mill (manufactured by NIPPON PNEUMATIC MFG. CO., LTD.), CUM type centrifugal mills (manufactured by Mitsui Mining Co., Ltd.), an exceed mill (manufactured by MAKONO MFG. CO., LTD.), ULTRAPLEX (manufactured by MAKONO MFG. CO., LTD.), CONTRAPLEX (manufactured by MAKONO MFG. CO., LTD.), KOLLOPLEX (manufactured by MAKONO MFG. CO., LTD.), a sample mill (manufactured by Seishin Enterprise Co., Ltd.), BANTAM mill (manufactured by Seishin Enterprise Co., Ltd.), an atomizer (manufactured by Seishin Enterprise Co., Ltd.), a tornado mill (NIKKISO Co., Ltd.), NEA mill (manufactured by DALTON Corporation), an HT type fine pulverizer (manufactured by HORAI CO., LTD.), a free pulverizer (manufactured by NARA MACHINERY Co., Ltd.), NEW COSMOMIZER (manufactured by NARA MACHINERY Co., Ltd.), a turbo mill (manufactured by Freund Corp.), a gather mill (manufactured by Nishimura Machine Works Co., Ltd.), a super ultra mill (manufactured by Nishimura Machine Works Co., Ltd.), a blade mill (manufactured by Nisshin Engineering Inc.), a super rotor (manufactured by Nisshin Engineering Inc.), Npa crusher (manufactured by Sansho Industry Co., Ltd.), WILLEY pulverizer (manufactured by Sanki Seisakusho, K.K.), a pulp pulverizer (manufactured by ZUIKO CORPORATION), JACOBSON fine pulverizer (manufactured by Shinko Pantec Co., Ltd.), and a universal mill (manufactured by TOKUJU CORPORATION); jet type mills such as a CGS type jet mill (manufactured by Mitsui Mining Co., Ltd.), a micron jet (manufactured by Hosokawa Micron Corporation), a counter jet mill (manufactured by Hosokawa Micron Corporation), a cross jet mill (manufactured by Kurimoto, Ltd.), an ultrasonic jet mill (manufactured by Nippon Pneumatic Mfg. Co., Ltd.), a current jet (manufactured by Sansho Industry Co., Ltd.), a jet mill (manufactured by Sansho Industry Co., Ltd.), EBARA jet micronizer (manufactured by EBARA CORPORATION), EBARA TRIAD jet (manufactured by EBARA CORPORATION), CEREN Miller (manufactured by MASUKO SANGYO Co., Ltd.), NEW-MICROCYCLOMAT (manufactured by Masuno Seisakusho Ltd.), and CRYPTRON (manufactured by Kawasaki Heavy Industries, Ltd.). Among these, from the viewpoint of excellent fine pulverizability, it is preferable to use a tornado mill (NIKKISO Co., Ltd.), a blade mill (manufactured by Nisshin Engineering Inc.), or a free pulverizer (manufactured by NARA MACHINERY Co., Ltd.).

First, in a case where powder is produced by performing only mechanical pulverization without performing an acid treatment, it is preferable to use a vertical roller mill having excellent fine pulverizability. In the present invention, the vertical roller mill indicates a centrifugal vertical pulverizer belonging to roller mills and performs pulverization so as to grind ingredients with a discotic turntable and a vertical roller. The most distinctive feature of the rotary roller mill is excellent fine pulverizability, and the reason for this is that ingredients are pulverized using a force of compressing ingredients between the roller and the table and the shearing force generated between the roller and the table. Examples of the pulverizer which has been used in the related art include a rotary roller mill (manufactured by Scenion Inc.), a longitudinal roller mill (manufactured by Schaeffler Japan Co., Ltd.), a roller mill (manufactured by Kotobuki Engineering & Manufacturing Co., Ltd.), a VX mill (manufactured by Kurimoto, Ltd.), a KVM type vertical mill (manufactured by EARTHTECHNICA Co., Ltd.), and an IS mill (manufactured by IHI Plant Engineering Corporation). Even in the case where powder is produced by performing only mechanical pulverization, the size of the powder can be adjusted to a predetermined value through the classifying step.

In the pet food of the present invention, 60% or more of food granules in the entire food granules constituting the pet food have a hardness of 2.5 kgw or less immediately after being immersed in dilute hydrochloric acid (pH of 2.5) at 25°C for 10 minutes. Here, the expression "immediately after being immersed" indicates within 1 to 2 minutes after the pet food is taken out from the dilute hydrochloric acid.

The dilute hydrochloric acid is dilute hydrochloric acid obtained by adding several drops of 1 N (newton) of hydrochloric acid dropwise to distilled water and adjusting the pH thereof to 2.5 (25°C).

The hardness after the pet food is immersed in the dilute hydrochloric acid for 10 minutes is considered to correspond to the hardness of the eaten pet food in the stomach. In a case where the hardness thereof is 2.5 kgw or less, physical stimulation to the stomach wall is reduced so that vomiting of a pet after eating can be suppressed. In other words, as the food granules with the above-described hardness are contained as much as possible in the entire food granules constituting the pet food eaten by a pet for one feed, vomiting of the pet after eating can be suppressed.

In addition, the lower limit of the hardness is 0.0 kgw (measuring precision or less).

In the pet food of the present invention, it is preferable that 45% or more of food granules in the entire food granules constituting the pet food have a hardness of 1.3 kgw or less immediately after being immersed in dilute hydrochloric acid (pH of 2.5) at 25°C for 10 minutes. In a case where 45% or more of food granules in the entire food granules constituting the pet food have a hardness of 1.3 kgw or less, variation in amount of water absorption can be reduced. Further, by increasing the percentage of granules which become softer, the effect of water absorption is improved and the effect of suppressing vomiting is also improved.

The hardness of pet food granules is acquired as a numerical value read from the chewing waveform obtained by performing measurement under the following measurement conditions using the following physical property measuring device.

<Physical property measuring device>

    Manufacturing company: TAKEMOTO Company
    Electronic device: TEXTUROMETER (model No.: GTX-2)

<Measurement conditions>

    Plunger: circular plate having smooth surface in contact with pet food and having diameter of 20 mm ("chromium with diameter of 20 mm")
    Platform: flat dish
    Clearance (maximum compression point): 2 mm
    Output: 1 V
    BITE SPEED: LOW (6 times/min)
    Number of times of chewing: chewing once

<Measuring method>

One granule of pet food immediately after being immersed in the dilute hydrochloric acid for 10 minutes (within 1 minute after being taken out) is placed on the flat dish, and the plunger is pressed from the above to apply a load thereto. At this time, the granule is crushed until the distance between the plunger and the platform becomes 2 mm (clearance). The measurement is required to be completed within 1 to 2 minutes from when the pet food is taken out from the dilute hydrochloric acid.

<Reading numerical value from chewing waveform>

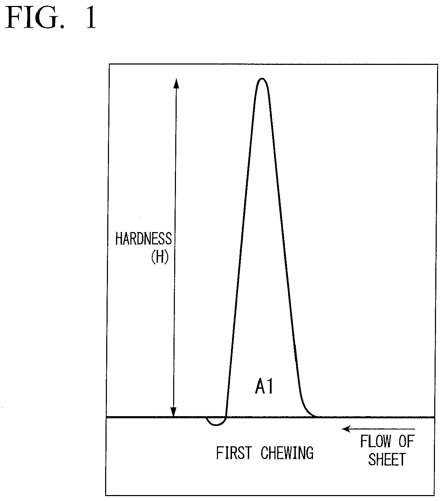

In the chewing waveform shown in FIG. 1, the hardness is acquired as follows.
Hardness (H): highest value in height of waveform (peak A1) at time of first chewing
In the chewing waveform shown in FIG. 1, each measured value means the following.
The hardness (H) shows the degree of physical hardness (hardness) of pet food and indicates the maximum test force when a load is applied to the pet food using a plunger.
The hardness of pet food according to the present invention can be acquired based on the chewing waveform obtained by performing measurement under conditions which are the same as or compatible with the above-described measurement conditions even in a case of using a physical property measuring device (texturometer) other than TEXTUROMETER (model No.: GTX-2) described above.
The method of acquiring the hardness described in the present specification is in conformity with the texture profile of Szczesniak (Szczesniak, A. S.: J. Food Sci., 28, 385 (1963)). The terms related to the texture are organized and systematized by Szczesniak at General Foods in the United States, and the correlation between measured values and sensory evaluation values is shown by Szczesniak using a texturometer (Szczesniak, A. S., Blandt, M. A. & Freidman, H. H.: J. Food Sci., 28, 397 (1963)).
The hardness of pet food before water absorption can also be measured using TEXTUROMETER (model No.: GTX-2) described above. The hardness of pet food before water absorption is not particularly limited and depends on the moisture content of pet food, but is preferably in a range of 2.0 kgw to 10.0 kgw and more preferably in a range of 2.0 kgw to 5.0 kgw.

The shape of a food granule in the pet food of the present invention may be a shape suitable for a pet to eat and is not particularly limited, but it is preferable that the food granule has a modified cross section. In a case where the food granule has a modified cross section, the effect of water absorption of pet food is improved and thus the effect of suppressing vomiting is also improved.

The modified cross section is defined by a modified cross section degree (D/d). Here, D represents a diameter of a circumscribed circle of the cross section of the food granule, and d represents a diameter of an inscribed circle of the cross section of the food granule. In the present invention, it is preferable that the food granule has a multi-lobal cross section with a modified cross section degree of 1.2 to 5 and more preferable that the food granule has a trilobal cross section or a tetralobal cross section with a modified cross section degree of 1.6 to 3.

In the pet food of the present invention, the size of the food granule is not particularly limited as long as the size thereof is suitable for a pet to eat, but it is preferable that the food granule has a long diameter of 5 to 15 mm, a short diameter of 5 to 15 mm, and a thickness of 2 to 5 mm and more preferable that the food granule has a long diameter of 7 to 10 mm, a short diameter of 7 to 10 mm, and a thickness of 2 to 3 mm. In a case where the size of the food granule is in the above-described range, the pet food is easily eaten by a pet.

[Method of measuring average long diameter and average short diameter]

In the present specification, the average long diameter of granules and small pieces is obtained by optionally taking 20 granules or small pieces out, measuring the longest diameters thereof using Vernier calipers, and setting the average value of these obtained values as the average long diameter. The shortest diameters in directions perpendicular to the directions of the longest diameters, and the average value of these obtained values is set as the average short diameter.

<Ingredients>

The ingredients of food granules are not limited as long as the ingredients can be used as feed. Known ingredients can be used for producing pet food. Examples of the ingredients include cereals (such as corn, wheat, and rice), beans (such as whole soybeans), vegetable protein (such as corn gluten meal and soybean protein), meat (such as chicken, beef, pork, venison, and meals (such as chicken meal and pork meal)), seafood (such as fish and meals (fish meal)), vegetables, additives (such as vitamins, minerals, an amino acid, flavoring ingredients, fibers, colorants, and palatability improvers), and external additives (such as fats and oils and palatability improvers). The meals indicate powder products obtained by compressing and finely grinding meat or seafood.

The external additives indicate components to be added (applied) after a mixture of ingredients is formed (granulated) in a granular shape.

In the present embodiment, granulated food granules may be coated with fats and oils as an external additive. In a case where the food granules are coated with fats and oils, the calorie of pet food can be adjusted while the effect of water absorption is obtained and the palatability can be improved while the effect of suppressing vomiting is obtained.

The fats and oils to be applied may be vegetable fats and oils or animal fats and oils. The fats and oils may be used alone or in combination of two or more kinds thereof.

As the fats and oils to be applied, fats and oils having a melting point of 35°C or higher are preferable. In a case where the melting point of fats and oils to be applied is in the above-described range, leaching of the fats and oils during storage of the pet food is unlikely to occur. Examples of the fats and oils having a melting point of 35°C or higher include animal fats and oils such as beef tallow (melting point of 35°C to 55°C), lard (melting point of 28°C to 48°C), and chicken fat (melting point of 30°C to 40°C); and vegetable fats and oils such as palm oil (melting point of 27°C to 50°C); and mixtures of these fats and oils. The fats and oils may be used alone or in combination of two or more kinds thereof.

The amount of fats and oils to be applied is preferably in a range of 3% to 20% by mass and more preferably in a range of 4% to 16% by mass with respect to the total amount of pet food (including the external additives). In a case where the amount of fats and oils to be applied is in the above-described range, the balance between the palatability and the appropriate intake amount of fats and oils is likely to be obtained.

A mixture obtained by mixing a meal extract with fats and oils may be used for coating the food granule. Preferred examples of the meal extract include known meal extracts such as chicken extracts (extracts derived from chicken) and fish extracts (extracts derived from fish).

After the food granule is coated with fats and oils, the food granule may be coated with a palatability improver in a powder form or liquid form as an external additive.

Examples of the palatability improver include an animal ingredient decomposed product, a vegetable ingredient decomposed product, a yeast extract, yeast, seafood, an amino acid, and a nucleic acid. The palatability improver may be used alone or in combination of two or more kinds thereof.

The amount of the palatability improver to be added is preferably in a range of 0.1% to 10% by mass and more preferably in a range of 1% to 5% by mass with respect to the total amount of pet food (including the external additives).

The composition of the ingredients is not particularly limited. It is preferable that the composition thereof is set such that the nutritional composition of food granules to be obtained is satisfied and excellent formability is obtained.

An example of the composition (including the external additives) of dry type food granules is described below.

(Example of composition of dry type food granules)

The dry type food granules contain 10% to 70% by mass of cereals, beans, and starch in total; 15% to 45% by mass of meat and seafood in total; 0% to 20% by mass of vegetable protein; 3% to 20% by mass of external additives; and the remaining other components.

<Method of producing pet food>

[Granulating step]

In the granulating step, a mixture of ingredients is granulated to obtain food granules. Known methods can be used as the method of mixing ingredients to obtain a mixture of the ingredients and the method of forming (granulating) the mixture of ingredients in a granular shape.

For example, a method of producing puffed granules using an extruder can be suitably used.

As a method of producing puffed granules using an extruder, for example, a method described in "Small Animal Clinical Nutrition 5th Edition" (edited by Michael S. Hand, Craig D. Thatcher, Rebecca L. Remillard, Philip Roudebusg, and Bruce J. Novotny, published by Mark Morris Associates; 2014; p 209 to 215) or the like can be used.

An example of the method of producing puffed granules using an extruder is as follows. First, in the ingredients of puffed granules, ingredients other than external additives are pulverized as necessary and mixed. The ingredients may be mixed while being pulverized using a grinder or the like. Further, water (which is not included in the ingredient composition) is added thereto as necessary to obtain a mixture of the ingredients.

The obtained mixture of ingredients is put into the extruder, heated, pressed, and extruded from an outlet. The outlet is provided with a plate in which a hole having a predetermined shape is formed and a cutter cutting the mixture of ingredients extruded from the plate to have a predetermined length (thickness). At the same time with the extrusion of the mixture of ingredients from the hole in the plate and the formation of the mixture in a predetermined shape by cutting the mixture using a cutter, the mixture of ingredients are released to the atmospheric pressure from the pressurized state so that water vapor in the mixture of ingredients expands, and the mixture of ingredients is puffed, thereby obtaining porous granules.

[Drying step]

The granules to be obtained in the above-described manner are dried as necessary until a predetermined moisture content is obtained to obtain puffed granules (food granules). In a case where dry type food granules are produced, the drying step is indispensable.

For example, the moisture content of granules to be discharged from the extruder is in a range of 10% to 20% by mass. In a case where the moisture content of the granules is in the above-described range, excellent formability is likely to be obtained.

The temperature of granules to be discharged from the extruder depends on the heating temperature in the extruder. For example, the temperature thereof may be in a range of 90°C to 150°C.

As the method of drying the granules discharged from the extruder, a known method can be appropriately used. Examples of the known method include a hot air drying method of drying granules by blowing hot air to the granules; a vacuum drying method; and a method of frying granules in oil. For example, a hot air drying method using a conveyor type hot air dryer is preferable.

The drying conditions (the temperature and the time) may be conditions for increasing the temperature of granules to 100°C or higher to evaporate the moisture in the granules without thermal denaturation of the components of the granules and adjusting the moisture content of the granules to a desired value. For example, in a case where the granules are dried by a hot air dryer, the temperature of the hot air coming into contact with the granules is preferably in a range of 100°C to 140°C and more preferably in a range of 100°C to 110°C. The drying time is particularly limited, and the granules are dried for approximately 5 to 20 minutes.

The pet food may be further coated with a coating agent containing crude beef tallow, a seasoning, or a flavoring agent after being dried.

The coating method is not particularly limited, and the pet food can be coated according to a vacuum coating method.

The vacuum coating method is a method of reducing the pressure in a state in which the heated food granules and the coating agent are in contact with each other or adhere to each other and slowly releasing the food granules to the atmosphere. The coating agent may be in a liquid or powder state. By coating the food granules with the coating agent, the palatability (biting property) for a pet can be improved.

The pet food of the present invention can be fed to any pets including dogs and cats, but it is preferable that the pet food is fed to cats because the effect of suppressing vomiting of cats is further excellent.

Examples

The present invention will be described in more detail with reference to the following example, but the present invention is not limited to these examples. Hereinafter, "%" indicates "% by mass" unless otherwise noted.

[Average grain size and grain size distribution of fibers]

With each of fibers (F)-1 to (F)-5, 0.5 g of the fibers were collected in a 100 ml beaker, 60 ml of 0.5% hexametaphosphoric acid solution was added to the beaker, and the solution was treated under conditions of an output of 100% for 2 hours using an ultrasonic treatment device (manufactured by Hielscher Ultrasonic GmbH), thereby obtaining a measurement sample.

The obtained sample was analyzed by a laser diffraction type grain size distribution measuring device (product name: MASTERSIZER 2000, manufactured by Spectris Co., Ltd.), the grain size distribution was expressed as accumulation distribution, and the value at which the accumulation distribution became 50% is set as the average grain size. Further, the percentage of refined cellulose (fibers) having an average grain size of 100 $\mu$m or greater, the percentage of refined cellulose (fibers) having an average grain size of 200 $\mu$m or greater, and the percentage of refined cellulose (fibers) having an average grain size of 300 $\mu$m or greater were respectively calculated based on the total accumulation distribution. The results are listed in Table 1.

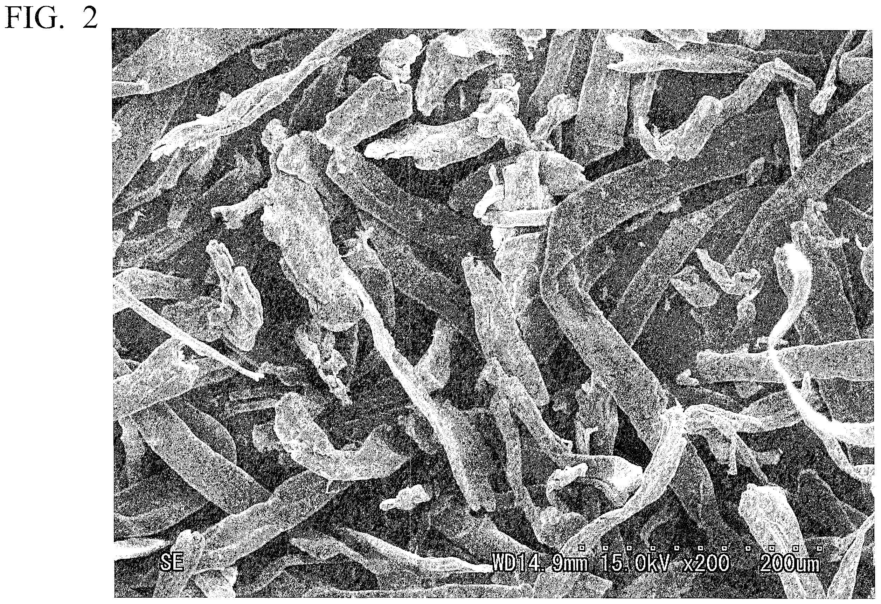

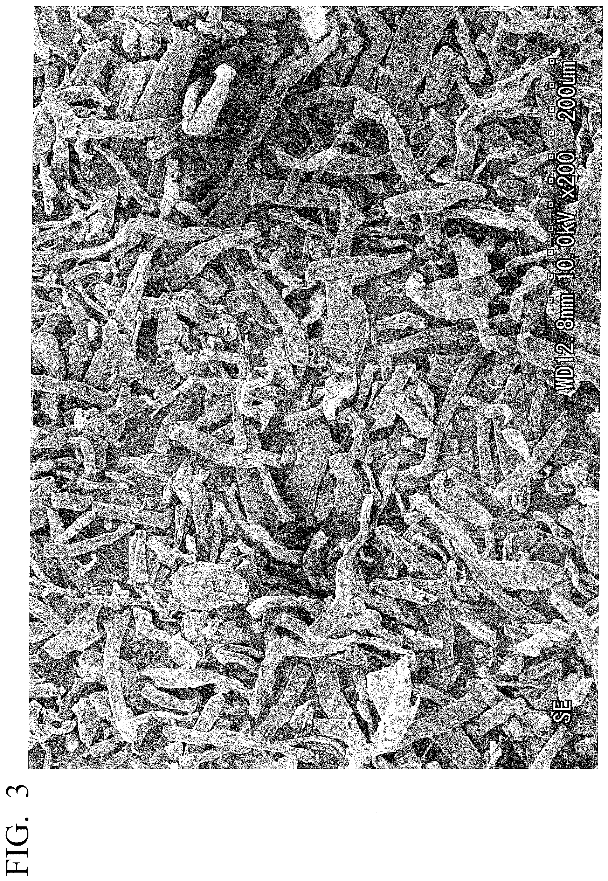

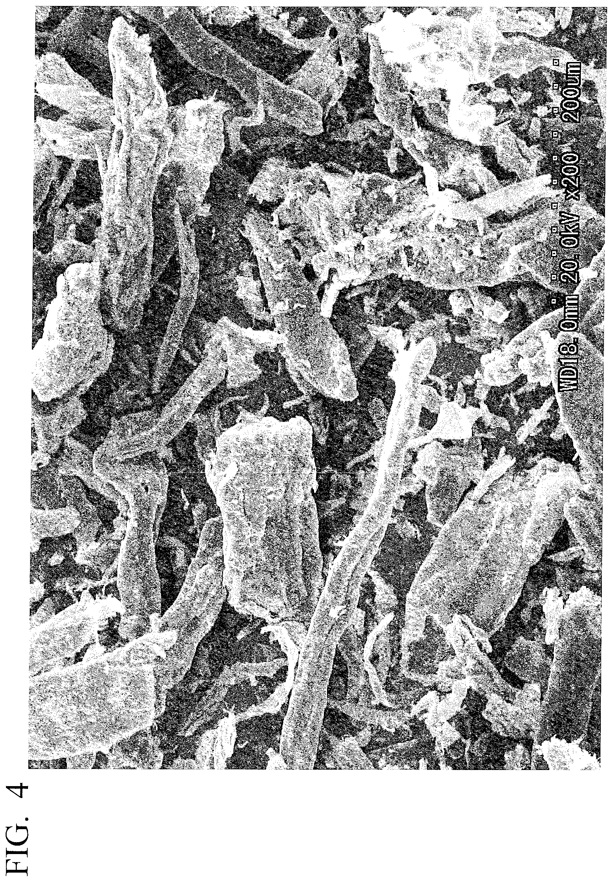

In addition, FIG. 2 is a photomicrograph of fibers (F)-3, FIG. 3 is a photomicrograph of fibers (F)-4, and FIG. 4 is a photomicrograph of fibers (F)-5.

(F)-1: refined cellulose having average grain size of 71.5 $\mu$m
(F)-2: refined cellulose having average grain size of 57.2 $\mu$m
(F)-3: mixture of (F)-1 and (F)-2 [(F)-1:(F)-2 = 35:65 (mass ratio)]
(F)-4: cellulose having average grain size of 32.2 $\mu$m
(F)-5: lignocellulose

[Table 1]

| Fibers | Average grain size ($\mu$m) | Percentage of fibers (%) | | |
|---|---|---|---|---|
| | | 100 $\mu$m or greater | 200 $\mu$m or greater | 300 $\mu$m or greater |
| (F)-1 | 71.5 | 39.0 | 17.4 | 10.6 |
| (F)-2 | 57.2 | 27.4 | 6.9 | 3.1 |
| (F)-3 | 62.2 | 31.5 | 10.5 | 5.7 |
| (F)-4 | 32.2 | 11.5 | 1.6 | 0.6 |
| (F)-5 | 95.9 | 51.8 | 29.1 | 18.4 |

[Evaluation of water absorbing properties]

With each of the fibers (F)-1 to (F)-5, the amount of water immediately before occurrence of water separation from fibers was confirmed by visual observation when 2 g of the fibers were put in a container, water was added dropwise thereto, and the solution was uniformly mixed. The measurement was performed 20 times on each of the fibers (F)-1 to (F)-5, and the average value of the amounts of water and the standard deviation were evaluated as water absorbing properties. The results are listed in Table 2.

[Table 2]

| Fibers | (F)-1 | (F)-2 | (F)-3 | (F)-4 | (F)-5 |
|---|---|---|---|---|---|
| Average value of amounts of water | 14.7 | 9.3 | 11.0 | 6.7 | 11.5 |
| Amount of water | 16 | 9 | 12 | 6 | 10 |
| | 15 | 10 | 10 | 7 | 14 |
| | 15 | 11 | 10 | 6 | 10 |
| | 14 | 9 | 12 | 7 | 14 |
| | 14 | 9 | 10 | 7 | 10 |
| | 15 | 10 | 11 | 8 | 11 |
| | 14 | 8 | 13 | 6 | 13 |
| | 14 | 9 | 10 | 6 | 15 |
| | 16 | 9 | 10 | 8 | 12 |
| | 17 | 10 | 12 | 7 | 10 |
| | 14 | 9 | 10 | 7 | 10 |
| | 13 | 9 | 13 | 6 | 14 |
| | 13 | 10 | 11 | 7 | 10 |
| | 13 | 9 | 13 | 6 | 11 |
| | 15 | 8 | 10 | 6 | 12 |
| | 14 | 9 | 10 | 6 | 10 |
| | 16 | 9 | 10 | 7 | 10 |
| | 16 | 10 | 9 | 6 | 10 |
| | 15 | 10 | 12 | 7 | 13 |
| | 14 | 10 | 11 | 6 | 10 |
| | 14 | 10 | 11 | 7 | 11 |
| | 15 | 9 | 11 | 6 | 10 |
| | 15 | 8 | 11 | 6 | 14 |
| | 15 | 9 | 12 | 7 | 10 |
| | 15 | 9 | 10 | 6 | 12 |
| | 15 | 10 | 13 | 7 | 10 |
| | 14 | 9 | 10 | 8 | 10 |
| | 17 | 12 | 11 | 7 | 14 |
| | 16 | 9 | 12 | 7 | 12 |
| | 13 | 9 | 12 | 7 | 12 |
| | 14 | 7 | 10 | 7 | 12 |
| Standard deviation | 1.10 | 0.94 | 1.14 | 0.65 | 1.65 |

Based on the results listed in Table 2, it was confirmed that variation in amount of water absorption of the refined cellulose ((F)-1 to (F)-3) was smaller than that of lignocellulose ((F)-5).

[Example 1, Comparative Examples 1 and 2, and Reference Example 1]

First, a mixture of ingredients having the compositional ratio listed in Table 3 with the fibers listed in Table 4 was obtained.

The obtained mixture was subjected to a heat treatment in a temperature range of 80°C to 100°C for 3 minutes using a preconditioner and then granulated so as to obtain a mixture of circular food granules having a diameter of 5 to 15 mm and a thickness of 2 to 5 mm with tetralobal food granules having an inner diameter of 5 to 15 mm and an outer diameter of 2 to 5 mm (modified cross section degree of 1.2 to 5) using an extruder. The mixture was subjected to a heat treatment in a temperature range of 120°C to 135°C for 30 seconds during the granulation through extrusion. Thereafter, the obtained food granules were dried in a temperature range of approximately 120°C to 140°C for approximately 15 minutes using a dryer.

Next, the dried food granules were coated with a coating agent containing crude beef tallow, a seasoning, and a flavoring agent such that the coating amount thereof was set to 5% by mass with respect to the entire pet food (including the external additives), thereby obtaining pet food.

The obtained pet food was evaluated as follows.

[Moisture content]

The moisture content of each pet food of Example 1, Comparative Examples 1 and 2, and Reference Example 1 was measured according to the following method.

An object to be measured was pulverized using a pulverizer so as to pass through a sieve having an opening diameter of 1 mm and then used as a sample. The mass (W1 gram) of an aluminum weighing can was measured in advance as a constant weight value. The sample was put into the aluminum weighing can and the mass (W2 gram) was weighed. Next, the sample was dried under conditions of 135°C for 2 hours using a forced circulation type hot air drier. The sample was allowed to stand and cool in a dry atmosphere (in a silica gel desiccator) and the mass thereof (W3 gram) was weighed. The moisture content was acquired from the obtained respective mass values using the following equation.

$$\text{Moisture content (unit: \% by mass)} = (W2 - W3) \div (W2 - W1) \times 100$$

The results are listed in Table 4.

[Table 3]

| Ingredients | Blending amount |
|---|---|
| Cereals | 54% |
| Meat | 21.2% |
| Fish | 9.6% |
| Yeasts | 0.6% |
| Vitamins, minerals, and amino acid | 2.1% |
| Crude beef tallow | 5% |
| Refined cellulose | 7.5% |

[Table 4]

| Fibers | Example 1 | Comparative Example 1 | Comparative Example 2 | Reference Example 1 |
|---|---|---|---|---|
| (F)-3 | 7.50% | | | |
| (F)-4 | | | 7.50% | |
| (F)-5 | | | | 7.50% |
| Moisture content | 8.00% | 8.00% | 8.00% | 8.00% |

[Evaluation of water absorbing properties]

Each pet food of Example 1, Comparative Examples 1 and 2, and Reference Example 1 was immersed in a hydrochloric acid solution, obtained by dissolving 0.3% of Blue No. 2 in a hydrochloric acid solution with a pH of 2.5, at 25°C and the resulting solution was allowed to stand for 30 minutes. The food granules after being allowed to stand for 30 minutes were visually observed, and the percentage of granules satisfying the following evaluation criteria was acquired. The results are listed in Table 5.

A: The colorant was infiltrated into the food granules.

B: The colorant was infiltrated in the middle of the food granules.

C: The colorant was not infiltrated into the food granules at all.

[Table 5]

| Water absorbing properties | Example 1 | Comparative Example 1 | Comparative Example 2 | Reference Example 1 |
|---|---|---|---|---|
| A | 30% | 7% | 17% | 33% |
| B | 37% | 43% | 37% | 33% |
| C | 33% | 50% | 47% | 33% |
| Total percentage of A and B | 67% | 50% | 53% | 67% |

[Hardness after water absorption]

The hardness of the pet food after water absorption was measured according to the following method. Specifically, the hardness of 20 granules in each pet food of Example 1, Comparative Examples 1 and 2, and Reference Example 1 before and after water absorption was evaluated.

First, dilute hydrochloric acid having a pH of 2.5 (25°C) was prepared by adding several drops of 1 N (newton) of hydrochloric acid dropwise to distilled water.

The hardness of pet food granules was acquired as a numerical value read from the chewing waveform obtained by performing measurement under the following measurement conditions using the following physical property measuring device.

<Physical property measuring device>

Manufacturing company: TAKEMOTO Company

Electronic device: TEXTUROMETER (model No.: GTX-2)

<Measurement conditions>

Plunger: circular plate having smooth surface in contact with pet food and having diameter of 20 mm ("chromium with diameter of 20 mm")
Platform: flat dish
Clearance (maximum compression point): 2 mm
Output: 1 V
BITE SPEED: LOW (6 times/min)
Number of times of chewing: chewing once

<Measuring method>

One granule of pet food immediately after being immersed in the prepared dilute hydrochloric acid for 10 minutes (within 1 minute after being taken out) was placed on the flat dish, and the plunger was pressed from the above to apply a load thereto. At this time, the granule was crushed until the distance between the plunger and the platform became 2 mm (clearance). The measurement was completed within 1 to 2 minutes from when the pet food was taken out from the dilute hydrochloric acid.

<Reading numerical value from chewing waveform>

In the chewing waveform shown in FIG. 1, the hardness was acquired as follows.

Hardness (H): highest value in height of waveform (peak A1) at time of first chewing

In the chewing waveform shown in FIG. 1, each measured value means the following.

The hardness (H) shows the degree of physical hardness (hardness) of pet food and indicates the maximum test force when a load is applied to the pet food using a plunger.

The results are listed in Table 6.

[Table 6]

| | Example 1 | Comparative Example 1 | Comparative Example 2 | Reference Example 1 |
|---|---|---|---|---|
| Hardness after water absorption (kgw) | 3.0 | 3.9 | 3.6 | 3.1 |
| | 6.8 | 7.0 | 7.0 | 5.6 |
| | 6.0 | 7.0 | 7.2 | 7.0 |
| | 5.8 | 6.0 | 6.0 | 6.8 |
| | 7.2 | 6.6 | 6.6 | 7.0 |
| | 7.0 | 6.8 | 6.8 | 6.6 |
| | 6.6 | 6.6 | 5.8 | 5.0 |
| | 6.6 | 6.0 | 6.0 | 7.2 |
| | 0.8 | 5.8 | 7.0 | 0.6 |
| | 1.0 | 6.8 | 5.6 | 0.0 |
| | 0.2 | 5.8 | 2.4 | 0.6 |
| | 0.8 | 2.4 | 2.0 | 0.8 |
| | 0.6 | 2.4 | 2.0 | 1.2 |
| | 1.2 | 1.2 | 0.0 | 2.0 |
| | 2.0 | 2.0 | 2.0 | 2.4 |
| | 2.4 | 0.0 | 0.0 | 0.0 |
| | 0.8 | 0.0 | 0.8 | 1.8 |
| | 0.0 | 2.0 | 1.8 | 2.0 |
| | 0.0 | 0.0 | 0.6 | 2.4 |
| | 1.8 | 0.8 | 0.0 | 0.8 |
| | 1.6 | 2.0 | 1.8 | 1.4 |

Based on the results listed in Table 5, it was confirmed that the pet food of Example 1 had excellent water absorbing properties than those of each pet food of Comparative Examples 1 and 2.

Further, based on the results listed in Table 6, it was confirmed that the pet food of Example 1 had higher percentages of granules respectively having a hardness of 2.5 kgw or less and a hardness of 1.3 kgw or less after water absorption than those of each pet food of Comparative Examples 1 and 2. In addition, it was confirmed that the pet food of Example 1 had a higher percentage of granules having a hardness of 1.3 kgw or less after water absorption than that of pet food of Reference Example 1. Accordingly, it was confirmed that the variation in amount of water absorption in the pet food of Example 1 was smaller than that of each pet food of Comparative Examples 1 and 2 and Reference Example 1.

[Evaluation of effect of suppressing vomiting]

The effect of suppressing vomiting was evaluated using the pet food of Example 1 according to the following method.

48 cats vomiting at least once a week and being bred alone were monitored. The frequency of pet food vomiting and the frequency of hairball vomiting of each cat being monitored were listed in Table 7.

50 to 100 g of test pet food (test product) was provided for each cat in place of pet food (ordinary product) which had been provided for each cat as one feed, and the test was continued for 21 days. After the test, evaluations of (i) suppression of food vomiting, (ii) suppression of hairball vomiting, (iii) eating conditions, (iv) intention to use, and (v) comprehensive relative evaluation were performed by the owners of cats based on the following criteria. The results are listed in Table 8.

A: The test product was extremely better than the ordinary product.
B: The test product was slightly better than the ordinary product.
C: The superiority or inferiority between the ordinary product and the test product was not able to be determined.
D: The ordinary product was slightly better than the test product.
E: The ordinary product was extremely better than the test product.

[Table 7]

| | Frequency | Number of cats |
|---|---|---|
| Frequency of food vomiting | 5 times or more per week | 1 |
| | 2 or 3 times per week | 25 |
| | Once per week | 22 |
| Frequency of hairball vomiting | Once or more per week | 17 |
| | Less than once per week | 18 |
| | Almost no vomiting | 13 |

[Table 8]

| | Evaluation (%) | | | | |
|---|---|---|---|---|---|
| | A | B | C | D | E |
| (i) Suppression of food vomiting | 30 | 35 | 29 | 6 | 0 |
| (ii) Suppression of hairball vomiting | 15 | 25 | 52 | 6 | 2 |
| (iii) Eating conditions | 24 | 29 | 31 | 6 | 10 |
| (iv) Intension to use | 27 | 35 | 10 | 15 | 13 |
| (v) Comprehensive relative evaluation | 21 | 40 | 10 | 19 | 10 |

Based on the results listed in Table 8, since 64% of the owners evaluated the item (i) suppression of food vomiting as A or B, it was confirmed that the owners realized that the test product had the effect of suppressing vomiting.

Further, since 50% or more of the owners evaluated the items (iii) eating conditions, (iv) intention to use, and (v) comprehensive relative evaluation as A or B, it was confirmed that the owners satisfied with the test product.

Hereinbefore, preferred examples of the present invention have been described, but the present invention is not limited thereto. Additions, omissions, substitutions, and other modifications of configurations can be within the range not departing from the scope of the present invention. Further, the present invention is not limited by the foregoing description and only limited by the scope of the appended claims.

**Claims**

1. Pet food which contains refined cellulose and has a moisture content of 6% to 15% by mass,
   wherein an average grain size of the refined cellulose is 50 μm or greater, and
   60% or more of food granules in the entire food granules constituting the pet food have a hardness of 2.5 kgw or less immediately after being immersed in dilute hydrochloric acid (pH of 2.5) at 25°C for 10 minutes.

2. The pet food according to claim 1,
   wherein, in the refined cellulose, the percentage of refined cellulose having a grain size of 100 μm or greater is 20% or greater, the percentage of refined cellulose having a grain size of 200 μm or greater is 5% or greater, and the percentage of refined cellulose having a grain size of 300 μm or greater is 2% or greater.

3. The pet food according to claim 1 or 2,
   wherein 45% or more of food granules in the entire food granules constituting the pet food have a hardness of 1.3 kgw or less immediately after being immersed in dilute hydrochloric acid (pH of 2.5) at 25°C for 10 minutes.

4. The pet food according to any one of claims 1 to 3,
   wherein the refined cellulose is derived from a coniferous tree.

5. The pet food according to any one of claims 1 to 4,
   wherein the food granule has a modified cross section.

6. The pet food according to any one of claims 1 to 5,
   wherein the food granule has a long diameter of 5 to 15 mm, a short diameter of 5 to 15 mm, and a thickness of 2 to 5 mm.

7. The pet food according to any one of claim 1 to 6,
   wherein the food granule is coated with fats and oils.

8. The pet food according to any one of claims 1 to 7 which is feed for a cat.

FIG. 1

FIG. 2

FIG. 3

FIG. 4

**EP 3 357 346 A1**

### INTERNATIONAL SEARCH REPORT

| International application No. |
| --- |
| PCT/JP2015/077854 |

**A. CLASSIFICATION OF SUBJECT MATTER**
*A23K1/18*(2006.01)i, *A23K1/00*(2006.01)i

According to International Patent Classification (IPC) or to both national classification and IPC

**B. FIELDS SEARCHED**

Minimum documentation searched (classification system followed by classification symbols)
A23K1/18, A23K1/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-163233 A (Oji Paper Co., Ltd.), 17 July 2008 (17.07.2008), paragraphs [0007] to [0026] (Family: none) | 1-8 |
| A | JP 2014-79238 A (Uni-Charm Corp.), 08 May 2014 (08.05.2014), paragraphs [0004] to [0008], [0022] to [0030], [0046] to [0050] & US 2014/0093621 A1 & CA 2828113 A & CN 103704493 A | 1-8 |
| A | JP 2004-323500 A (Yugen Kaisha Uri), 18 November 2004 (18.11.2004), entire text (Family: none) | 1-8 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 October 2015 (20.10.15) | 02 November 2015 (02.11.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**INTERNATIONAL SEARCH REPORT**

| International application No. |
|---|
| PCT/JP2015/077854 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 64-39953 A  (Nisshin Flour Milling Co., Ltd.), 10 February 1989 (10.02.1989), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003519639 A
- JP 2014079238 A

**Non-patent literature cited in the description**

- **SZCZESNIAK, A. S.** *J. Food Sci.,* 1963, vol. 28, 385
- **SZCZESNIAK, A. S. ; BLANDT, M. A. ; FREIDMAN, H. H.** *J. Food Sci.,* 1963, vol. 28, 397
- Small Animal Clinical Nutrition 5th Edition. Mark Morris Associates. 2014, 209-215